(19) **Europäisches Patentamt / European Patent Office / Office européen des brevets**

(11) **EP 2 211 457 A1**

(12) **EUROPEAN PATENT APPLICATION**
published in accordance with Art. 153(4) EPC

(43) Date of publication:
**28.07.2010 Bulletin 2010/30**

(51) Int Cl.:
*H02P 21/00* (2006.01)    *H02P 6/08* (2006.01)
*H02P 27/04* (2006.01)

(21) Application number: **08850998.9**

(22) Date of filing: **06.11.2008**

(86) International application number:
**PCT/JP2008/070169**

(87) International publication number:
**WO 2009/063786 (22.05.2009 Gazette 2009/21)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.11.2007 JP 2007296988**

(71) Applicant: **Kabushiki Kaisha Yaskawa Denki Kitakyushu-shi, Fukuoka 806-0004 (JP)**

(72) Inventor: **The designation of the inventor has not yet been filed**

(74) Representative: **Gendron, Vincent Christian et al S.A. Fedit-Loriot 38, avenue Hoche 75008 Paris (FR)**

(54) **MOTOR CONTROL DEVICE AND CONTROL METHOD THEREOF**

(57)    A motor control device which always operates at a maximum voltage even if a DC mother line voltage of a power conversion circuit changes and is made highly efficient, and its control method are provided.

The motor control device having a d, q-axes current instruction operation section (1, 2), a dq-converter (9), a current controller (3), a modulated wave instruction operation section (5) and a PWM generator (6) has a modulated wave instruction limiter (13) which limits a first modulated wave instruction and generates a second modulated wave instruction, a modulation rate saturation degree operation section (14) which obtains a modulation rate saturation degree from the first modulated wave instruction and a limit value of the modulated wave instruction limiter, and a weak field controller (4) which corrects a d-axis current value on the basis of the modulation rate saturation degree.

## FIG. 1

## Description

Technical Field

The present invention relates to a motor control device which performs weak field control in case of voltage saturation of a motor.

Background Art

As induced voltage of a motor increases in accordance with its speed, the motor cannot produce torque and the speed does not increase if a voltage instruction is saturated with respect to power supply. If a d-axis current instruction is reduced, though, the torque can be produced so that a speed control range can be extended. For an induction motor, a d-axis current is provided in accordance with a magnetic flux instruction in a normal region, and the d-axis current is reduced if voltage saturation occurs. For a surface-permanent-magnet synchronous motor (SPMSM), usually set the d-axis current to 0, and let a negative d-axis current flow in a voltage saturation region. For an interior-permanent-magnet synchronous motor (IPMSM), let a negative d-axis current flow in a normal region for a highly efficient operation, and add a negative current to this in the voltage saturation region.

A principle of weak field control will be explained below. For an induction motor or a wound field synchronous motor, a magnetic flux can be controlled by means of a field current instruction. Meanwhile, a field magnetic flux cannot be directly controlled for a permanent-magnet synchronous motor (SPMSM, IPMSM). Let a negative d-axis current flow, though, so that a magnetic flux in a d-axis direction can be reduced by means of a demagnetization effect due to a d-axis armature reaction, and that the weak field control is enabled. It is called weak magnetic flux control in some cases as, strictly speaking, the field is not controlled.

An example of a synchronous motor will be explained below. The synchronous motor is represented by a following current-voltage equation in a dq-coordinate system.

$$\begin{bmatrix} V_d \\ V_q \end{bmatrix} = \begin{bmatrix} R + pL_d & -\omega L_q \\ \omega L_d & R + pL_q \end{bmatrix} \begin{bmatrix} I_d \\ I_q \end{bmatrix} + \begin{bmatrix} 0 \\ \omega \Phi \end{bmatrix} \tag{1}$$

where p: differential operator
$I_d$, $I_q$: d-, q-axes currents
$V_d$, Vq: d-, q-axes voltages
$\omega$: electric angular velocity of the motor
R: armature resistance
$L_d$, $L_q$: d-, q-axes inductances
$\Phi$: interlinkage magnetic flux
Further, the torque is given by a following equation.
$$T = P\{\Phi I_q + (L_d - L_q)I_d I_q\} \tag{2}$$

where KT: torque constant, P: the number of pole pairs
According to the equation (1), let the element $R+pL_x$ be 0, a voltage $V_0$ induced by a whole interlinkage magnetic flux $\Phi_0$ is given by
$$V_o = \omega \Phi_o = \omega \sqrt{(L_d I_d + \Phi)^2 + (L_q I_q)^2} \tag{3}$$

Thus, a relationship between the induced voltage and the dq-axes currents is given by
$$(L_d I_d + \Phi)^2 + (L_q I_q)^2 = \Phi_o^2 = \left(\frac{V_o}{\omega}\right)^2 \tag{4}$$

If the number of rotation $\omega$ is constant for the equation (4), it is known that the induced voltage can be reduced if an absolute value of $I_d$ is rendered larger in the negative direction in the first element of the left side of the equation (4) in a range of $I_d > -\Phi/L_d$.

Meanwhile, an output due to a three-phase PWM inverter (a PWM generator + power conversion circuit is called a PWM inverter) is limited. Let a DC mother line voltage be $V_{Dc}$. If an output of each phase is a sine wave and a peak value of the sine wave overtakes a maximum voltage that can be output ($+/- V_{DC}/2$), the inverter cannot output an overtaken portion of the voltage. Meanwhile, if the output voltage is overlaid with a third harmonics component of the output frequency, a maximum voltage can be output without distortion when $V_{Dc}$ equals a maximum interphase voltage, i.e., a voltage practice value is given by a following equation.

$$V_{RMS} = \frac{V_{DC}}{\sqrt{2}} \tag{5}$$

Let a modulation rate in a case where the peak value of the sine wave equals the maximum voltage be 1, then a modulation rate in case of an overlay of the third harmonics component becomes $2/(\sqrt{3})$. Thus, if the voltage is treated as an effective value, the modulation rate $M_I$ is computed as follows.

$$V_1 = \sqrt{V_d^2 + V_q^2}$$

$$M_I = V_1 \cdot \frac{\sqrt{2}}{V_{DC}} \cdot \frac{2}{\sqrt{3}} \tag{6}$$

provided that an excessive modulation correction is added so that up to a sixth step where all the phases are turned on or off can be output, and that the modulation rate at this moment is approximately 1.27 ($=4/\pi$). A maximum voltage for computing the weak field control is determined on the basis of these values.

According to the ordinary weak field control, the induced voltage $V_0$ of the equation (4) is set to a maximum value $V_{0max}$ and simultaneous equations with the equation (2) are solved so that $I_d$ and $Iq$ are determined, provided that an ohmic loss component $RI_{max}$ in case of a maximum current $I_{max}$ is subtracted from the maximum voltage $V_{max}$ so that $V_{0max}$ can be computed. In case of microcomputer control, as it is difficult to solve the simultaneous equations in real time in relation to a CPU load rate, solutions of the simultaneous equations (2) and (4) are computed and tabulated in accordance with speed and torque in advance, and $I_d$ and $Iq$ are determined from the table owing to the speed and the torque during a control operation (refer to, e.g., Non-Patent Document 1).

As this method has a problem, however, in that the voltage cannot be correctly limited if a motor constant set value is different from its practical value, a motor control device generally controls the motor so that the output voltage equals the maximum voltage by comparing $V_1$ and the maximum value $V_{max}$ that has been set, performing I-control or PI-control and correcting a d-axis current instruction.

This is represented by an equation (7).

$$\Delta I_d = -\left(K_P + \frac{K_I}{S}\right)(V_{max} - V_1) \cdot \frac{1}{\omega} \qquad (7)$$

where $K_p$: proportional gain, $K_I$: integral gain

Why a voltage error on the right side is divided by the speed $(1/\omega)$ is for converting the voltage into a magnetic flux dimension as understood from the equation (4). As the d-axis current and a magnetic flux change are in proportion to each other, a control response can be kept constant by such an operation regardless of the number of rotation (refer to, e.g., Non-Patent Document 2).

Meanwhile, there is a method for computing, from a maximum voltage $V_{max}$ and a d-axis voltage instruction $V_d^*$,

$$\left|V_{qMAX}^*\right| = \sqrt{V_{max}^2 - V_d^{*2}} \qquad (8)$$

and correcting the d-axis current instruction by subtracting the above from a q-axis voltage instruction so as to perform PI-control (refer to, e.g., Patent Document 1).

Further, there is a method without a use of a voltage instruction for providing a power conversion means with a means for sensing voltage saturation so as to identify whether the voltage saturation occurs, and for integrating negative and positive constant values if sensing the voltage saturation and if not, respectively, so as to correct the d-axis current instruction (refer to, e.g., Patent Document 2).

Further, there is a method for performing highly accurate and responsive torque control by computing an instruction value of a phase error that is a deviation between the q-axis voltage instruction value and current sensing in case of saturation of a power converter output voltage by means of a deviation between reference axes of the control and of the motor, and by correcting the output voltage instruction value of the power converter by using the instruction value of the phase error (refer to, e.g., Patent Document 3).

[Non-Patent Document 1]
Yoji Takeda, Nobuyuki Matsui, Shigeo Morimoto and Yukio Honda, "Design and Control of Interior Magnet Synchronous Motor", Ohm-sha, October 25, 2001, pp. 26-27.
[Non-Patent Document 2]
Bon-Ho Bae, Nitin Patel, Steven Schultz and Seung-Ki Sul, "New Field Weakening Technique for High Saliency Interior Permanent Magnet Motor", 2003 IEEE Industry Application Conference, October 13, 2003.
[Patent Document 1]
Japanese Unexamined Patent Application Publication No. 2006-254572 (pp. 6-7, Fig. 1)
[Patent Document 2]
Japanese Unexamined Patent Application Publication No. 2003-209996 (pp. 4-6, Fig. 1)
[Patent Document 3]
Japanese Unexamined Patent Application Publication No. 2007-252052 (pp. 4-7, Fig. 1)

Disclosure of Invention

Problems to be Solved by the Invention

According to ordinary weak field control of a motor control device, as a maximum voltage is preset and a d-axis current instruction is corrected so that a voltage instruction equals this, a maximum voltage that a PWM inverter can output differs from the preset maximum voltage and causes insufficient functionality in some cases where a DC mother line voltage $V_{DC}$ of a power conversion circuit such as a battery changes. That is, there is a problem of inefficiency in that the voltage is saturated and the torque cannot be produced resulting in that the speed does not increase if the DC mother line voltage $V_{Dc}$ decreases with respect to the preset maximum voltage, and conversely that a current is let flow regardless of a margin of the voltage if $V_{DC}$ is higher than an assumed voltage. Further, as being computed on the basis of a deviation from the maximum voltage, the preset maximum voltage needs to be lower than the maximum voltage that the PWM inverter can output, and there is a problem of a poor voltage use rate and inefficiency even without a change of the DC mother line voltage.

Further, a method for sensing voltage saturation has a problem in that the number of rotation and a change of a power supply voltage cause a change of responsiveness of the weak field control.

Further, a method for using a phase error instruction value in case of voltage saturation needs a control changeover and a complicated process, and has a problem in that it is difficult to apply the method to a motor which uses reluctance, as a motor such as a surface-permanent-magnet synchronous motor (SPMSM) which does not use reluctance torque is presupposed.

The present invention is made in view of these problems, and has an object to provide a motor control device which always operates at a maximum voltage even if a DC mother line voltage of a power conversion circuit changes and is made highly efficient, and to provide its control method. Means for Solving the Problems

In order to solve the above problems, the present invention is configured as follows.

An invention according to Claim 1 is a motor control device having a current instruction operation section which computes a d-axis current instruction and a q-axis current instruction on the basis of a torque instruction in a dq-coordinate system which is set with respect to a motor magnetic flux direction, the motor control device having a dq-converter which converts a motor current detected value into the dq-coordinate system and computes a d-axis current value and a q-axis current value, the motor control device having a current controller which computes dq-axes voltage instructions such that the d-axis current value and the q-axis current value equal the d-axis current instruction and the q-axis current instruction, the motor control device having a modulated wave instruction operation section which obtains a first modulated wave instruction on the basis of the dq-axes voltage instructions and a DC mother line voltage of a power conversion circuit, the motor control device having a PWM generator which generates a PWM pattern on the basis of a second modulated wave instruction and a PWM carrier signal. The motor control device has a modulated wave instruction limiter which limits the first modulated wave instruction and generates the second modulated wave instruction, a modulation rate saturation degree operation section which obtains a modulation rate saturation degree from the first modulated wave instruction and a limit value of the modulated wave instruction limiter, and a weak field controller which corrects the d-axis current instruction value on the basis of the modulation rate saturation degree.

An invention according to Claim 2 is the motor control device according to Claim 1, wherein the first modulated wave instruction is a modulated wave instruction of each of motor output phases, the modulated wave instruction limiter causing a maximum value and a minimum value of a modulated wave at the motor output phase to be limit values, the modulated wave instruction limiter limiting the first modulated wave instruction between the maximum value and the minimum value so as to obtain a second modulated wave instruction of each of the motor output phases, the modulation rate saturation degree operation section synthesizing modulated wave differential values of the respective motor output phases obtained from the first modulated wave instruction and the limit values of the modulated wave instruction limiter so as to obtain the modulation rate saturation degree.

An invention according to Claim 3 is the motor control device according to Claim 1, wherein the first modulated wave instruction is an output phase obtained from a first modulation rate instruction obtained from the dq-axes voltage instructions and the DC mother line voltage and the dq-axes voltage instructions and a phase indicating the motor magnetic flux direction, the modulated wave instruction limiter limiting the modulated wave instruction to an optionally set modulation rate limit value so as to obtain a second modulation rate instruction, the modulated wave instruction limiter obtaining the second modulated wave instruction for each of the motor output phases on the basis of the second modulation rate instruction and the output phase, the modulation rate saturation degree operation section obtaining the modulation rate saturation degree on the basis of a differential value between the first modulation rate instruction and the modulation rate limit value.

An invention according to Claim 4 is the motor control device according to Claim 1, wherein the first modulated wave instruction is a first modulation rate instruction obtained from the dq-axes voltage instructions and the DC mother line voltage and a modulated wave instruction of dq-axes components, the modulated wave instruction limiter limiting the modulated wave instruction to an optionally set modulation rate limit value so as to obtain a second modulation rate instruction, the modulated wave instruction limiter obtaining the second modulated wave instruction for each of the motor output phases on the basis of the second modulation rate instruction and the modulated wave instruction of the dq-axes components, the modulation rate saturation degree operation section obtaining the modulation rate saturation degree on the basis of a differential value between the first modulation rate instruction and the modulation rate limit value.

An invention according to Claim 5 is the motor control device according to one of Claim 3 and Claim 4, wherein the modulated wave instruction limiter adds an excessive modulation correction to one of the first modulated wave instruction and the second modulated wave instruction so that the second modulation rate instruction equals a practically output modulation rate so as to obtain the second modulated wave instruction.

An invention according to Claim 6 is the motor control device according to Claim 1, wherein the weak field controller obtains a d-axis current correction value by performing one of a PI-control operation and an I-control operation on the basis of the modulation rate saturation degree so as to correct the d-axis current instruction.

An invention according to Claim 7 is the motor control device according to Claim 1, wherein the motor control device limits the q-axis current instruction to a maximum current value that the motor control device can output on the basis of the d-axis current instruction value corrected by the weak field controller and the maximum current value.

An invention according to Claim 8 is the motor control device according to Claim 1, further having a dq-axes voltage deviation operation section which obtains dq-axes voltage deviations in the dq-coordinate system from the first modulated wave instruction, the second modulated wave instruction and the DC mother line voltage, wherein the current controller stops an integral operation or corrects an integral value on the basis of the dq-axes voltage deviations.

An invention according to Claim 9 is a control method of a motor control device having a current instruction operation section which computes dq-axes current instructions from a torque instruction, the motor control device having a coordinate converter which coordinate-converts a motor current detected value to dq-axes current values, the motor control device having a current controller which computes dq-axes voltage instructions such that the dq-axes current values equal the dq-axes current instructions, the motor control device having a modulated wave instruction operation section which computes a first modulated wave instruction from the dq-axes voltage instructions and a DC mother line voltage of a power conversion circuit, the motor control device having a PWM generator which generates a PWM pattern on the basis of a second modulated wave instruction. The control method of the motor control device has a step for computing the dq-axes current instructions on the basis of the torque instruction, a step for computing the dq-axes current values from the motor current detected value, a step for computing the dq-axes voltage instruction such that the dq-axes current values equal the dq-axes current instructions, a step for computing the first modulated wave instruction on the basis of the dq-axes voltage instructions and the DC mother line voltage of the power conversion circuit, a step for computing the second modulated wave instruction on the basis of the first modulated wave instruction and an optionally set modulated wave limit value, a step for generating the PWM pattern on the basis of the second modulated wave instruction, a step for driving the power conversion circuit on the basis of the PWM pattern, a step for obtaining a modulation rate saturation degree from the modulated wave limit value and the first modulated wave instruction, and a step for correcting the d-axis current on the basis of the modulation rate saturation degree.

An invention according to Claim 10 is the control method of the motor control device according to Claim 9, wherein the first modulated wave instruction is a modulated wave instruction of each of motor output phases, and the modulated wave limit value is a maximum value and a minimum value of a modulated wave at the motor output phase, the motor control device limiting the first modulated wave instruction between the maximum value and the minimum value so as to obtain a second modulated wave instruction of each of the motor output phases, the motor control device synthesizing a differential value between the first modulated wave instruction and the modulated wave limit value of each of the motor output phases so as to obtain the modulation rate saturation degree, the motor control device correcting the d-axis current instruction on the basis of the modulation rate saturation degree.

An invention according to Claim 11 is the control method of the motor control device according to Claim 9, wherein the first modulated wave instruction is an output phase obtained from a first modulation rate instruction obtained from the dq-axes voltage instructions and the DC mother line voltage and the dq-axes voltage instructions and a phase indicating the motor magnetic flux direction, the motor control device limiting the first modulated wave instruction to an optionally set modulation rate limit value so as to obtain the second modulation rate instruction, the motor control device obtaining the second modulated wave instruction for each of the motor output phases on the basis of the second modulation rate instruction and the output phase, and the motor control device obtaining the modulation rate saturation degree on the basis of a differential value between the first modulation rate instruction and the modulation rate limit value.

An invention according to Claim 12 is the control method of the motor control device according to Claim 9, wherein the first modulated wave instruction is a first modulation rate instruction obtained from the dq-axes voltage instructions and the DC mother line voltage and a modulated wave instruction of dq-axes components, the motor control device limiting the first modulated wave instruction to an optionally set modulation rate limit value so as to obtain a second modulation rate instruction, the motor control device obtaining the second modulated wave instruction for each of the motor output phases on the basis of the second modulation rate instruction and the modulated wave instruction of the dq-axes components, and the motor control device obtaining the modulation rate saturation degree on the basis of a differential value between the first modulation rate instruction and the modulation rate limit value.

An invention according to Claim 13 is the control method of the motor control device according to one of Claim 11 and Claim 12, wherein the motor control device adds an excessive modulation correction to one of the first modulated wave instruction and the second modulated wave instruction so that the second modulation rate instruction equals a practically output modulation rate so as to obtain the second modulated wave instruction.

An invention according to Claim 14 is the control method of the motor control device according to Claim 9, wherein the motor control device obtains a d-axis current correction value by performing one of a PI-control operation and an I-control operation on the basis of the modulation rate saturation degree so as to correct the d-axis current instruction.

An invention according to Claim 15 is the control method of the motor control device according to Claim 9, wherein the motor control device limits the q-axis current instruction to a maximum current value that the motor control device can output on the basis of the d-axis current instruction value corrected on the basis of a d-axis current correction value and the maximum current value.

An invention according to Claim 16 is the control method of the motor control device according to Claim 9, wherein the motor control device obtains dq-axes voltage deviations in the dq-coordinate system from the first modulated wave instruction, the second modulated wave instruction and the DC mother line voltage, and the current controller stops an integral operation or corrects an integral value on the basis of the dq-axes voltage deviations.

Advantages

According to the invention of Claim 1, a motor control device which corrects a d-axis current in accordance with a state of limitation of an output modulated wave and thus can perform proper weak field control always at a maximum voltage that can be output in case of voltage saturation, make the d-axis current optimum and operate highly efficiently can be provided.

Further, according to the invention of Claim 2, as a function of limiting a modulated wave instruction for each of motor output phases to be provided to a generic motor control device is used so that a modulation rate saturation degree is obtained, the invention can be easily incorporated in an existing system.

Further, according to the invention of Claim 3, as a modulation rate instruction and a modulation rate limit value are compared with each other, a weak field control function that reduces an operation load can be provided.

Further, according to the invention of Claim 4, as a modulation rate instruction and a modulation rate limit value are compared with each other and a second modulated wave instruction can be computed without a phase operation, a weak field control function that reduces an operation load can be provided.

Further, according to the invention of Claim 5, as the modulation rate instruction of the invention of Claim 3 or Claim 4 is enabled to equal a practical modulation rate in an excessive modulation region, responsiveness of the weak field control is enabled improve.

Further, according to the invention of Claim 6, as the weak field control is I- or PI-operated so that a magnetic flux can be surely controlled.

Further, according to the invention of Claim 7, as a current does not exceed a maximum current, the current can be properly limited in accordance with a change of a DC mother line voltage, and heat generation of a main circuit can be prevented from causing destruction.

Further, according to the invention of Claim 8, as an extra integral operation is omitted in case of voltage saturation, the modulation rate saturation degree can be properly computed.

Further, according to the invention of one of Claims 9-16, as the d-axis current is corrected on the basis of a differential between the modulation wave instruction and its limit value, a control method for performing a proper weak field control operation while always maintaining a maximum voltage that can be output, for improving a voltage use rate and for operating a motor highly efficiently by means of a smaller weak field current than that of an ordinary system can be provided.

Brief Description of Drawings

[Fig. 1] Fig. 1 is a control block diagram which shows a first example of the present invention.

[Fig. 2] Fig. 2 is a control block diagram which shows a modulated wave instruction operation section, a modulated wave instruction limiter and a modulated wave saturation degree operation section of the first example of the present invention.

[Fig. 3] Fig. 3 is a control block diagram which shows a weak field controller of the first example of the present invention.

[Fig. 4] Fig. 4 is a control block diagram which shows a modulated wave instruction operation section, a modulated wave instruction limiter and a modulated wave saturation degree operation section of a second example of the present invention.

[Fig. 5] Fig. 5 is a control block diagram which shows a modulated wave instruction operation section, a modulated wave instruction limiter and a modulated wave saturation degree operation section of a third example of the present invention.

[Fig. 6] Fig. 6 is a control block diagram which shows a modulated wave instruction limiter of a fourth example of the present invention.

[Fig. 7] Fig. 7 shows a relationship between a modulation rate instruction and a practical modulation rate.

[Fig. 8] Fig. 8 is a control block diagram which shows a fifth example.

[Fig. 9] Fig. 9 is a control block diagram which shows a dq-axes voltage deviation operation section of a sixth example.

[Fig. 10] Fig. 10 is a flowchart which shows a control method of the present invention.

Reference Numerals

| | |
|---|---|
| 1 | d-axis current instruction operation section |
| 2 | q-axis current instruction operation section |
| 3 | current controller |
| 4 | weak field controller |
| 5 | modulate wave instruction operation section |
| 6 | PWM generator |
| 7 | power conversion circuit |
| 8 | motor |
| 9 | dq converter |
| 10 | current sensor |
| 11 | position sensor |
| 12 | speed sensor |
| 13 | modulated wave instruction limiter |
| 14 | modulated wave saturation degree operation section |
| 15 | weak field controller |
| 21 | vector synthesizer |
| 31 | PI-controller |
| 32 | divider |
| 33 | filter |
| 34 | limiter |
| 41 | modulation rate limiter |
| 42 | three-phase converter |
| 51 | dq modulated wave instruction operation section |
| 61 | excessive modulation corrector |
| 7a | modulation rate instruction ideal value |
| 7b | DPWM modulation system |
| 7c | SVPWM modulation system |
| 7d | SPWM modulation system |
| 81 | q-axis current limiter |
| 91 | dq-axes voltage converter |
| 92 | subtractor |

Best Mode for Carrying Out the Invention

Embodiments of the present invention will be explained with reference to the drawings hereafter.

EXAMPLE 1

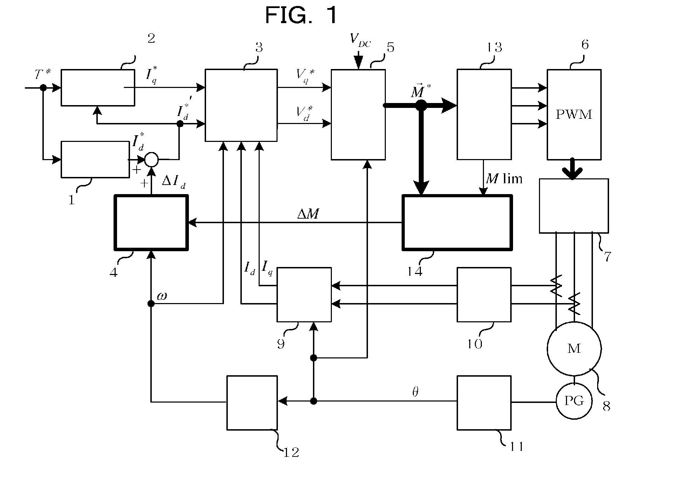

Fig. 1 is a control block diagram which shows an example in a case where a motor control device of the present invention is applied to a three-phase interior-permanent-magnet synchronous motor (IPMSM). A d-axis current instruction operation section 1 is provided with a torque instruction T* and computes an optimum d-axis current instruction $I_d$* in accordance with a motor characteristic. A q-axis current instruction operation section 2 is provided with the torque instruction T* and the d-axis current instruction $I_d$*, and computes a q-axis current instruction Iq*. The d-axis current instruction operation section 1 and the q-axis current instruction operation section 2 form a current instruction operation section. A current controller 3 is provided with the dq-axes current instructions and dq-axes detected current values, and obtains a voltage instruction in such a way that the dq-axes detected current values equal the dq-axes current instructions. Current control is generally formed by individual PI-control for each of the dq-axes and voltage FF compensation. According to the voltage FF compensation, interference terms of the dq axes and a reverse electromotive voltage are mainly computed from speed and a current in accordance with the equation (1), and these are added to a current control output so that dq axes voltage instructions ($V_d$*, Vq*) are obtained. A modulated wave instruction operation section 5 obtains a modulation rate and first modulated wave instructions of respective phases to be set to a PWM from the dq axes voltage instructions and a DC mother line voltage of a power conversion circuit. A modulated wave instruction limiter 13 limits the modulated wave instructions to a range that can be practically output and provides the PWM generator 6 with the modulated wave instructions. Although not shown in an ordinary example, modulated wave instructions are ordinarily limited in general. Further, in some cases, the modulated wave instruction operation section 5 or the modulated wave instruction limiter 13 compensates voltage loss of a switching element or a back flow diode of the power conversion circuit, and compensates a voltage error caused by dead time of the PWM.

The PWM generator 6 generates a switching instruction for a switching element of a power conversion circuit 7 in accordance with the modulated wave instruction that has been set. The power conversion circuit 7 converts DC voltage into AC owing to a switching operation and provides a motor 8 with power. A dq converter 9 converts current values of the respective phases, e.g., $(i_u, i_v)$, detected by a current sensor 10 into dq-axes current values $(I_d, Iq)$ owing to a motor magnetic pole position $\theta$ detected by a position sensor 11 and a dq-axes conversion formula. A modulation rate saturation degree operation section 14 computes a modulation rate saturation degree $\Delta M$ from the first modulated wave instructions obtained by the modulated wave instruction operation section 5 and a modulated wave limited value used by the modulated wave instruction limiter 13. A weak field controller 4 obtains a correction value of the d-axis current instruction $\Delta I_d$ owing to the modulation rate saturation degree $\Delta M$. A difference between the present invention and the ordinary technology is to add the modulation rate saturation degree operation section 14 and to provide the weak field controller 4 with the modulation rate saturation degree as an input.

Each of the portions will be explained below in detail.

Concerning the d-axis current current instruction operation section 1, there is a method for computing $I_d^*$ that provides a minimum current, i.e., a minimum copper loss with respect to the torque instruction, or a method for an operation such that efficiency is maximized taking up to iron loss into account. According to the method for minimizing copper loss, let a phase that provides maximum torque with respect to a current value be $\beta$, and let the dq axes currents

$$\begin{bmatrix} I_d^* \\ I_q^* \end{bmatrix} = \begin{bmatrix} -I_a^* \sin \beta \\ I_a^* \cos \beta \end{bmatrix} \tag{9}$$

then substitute this for the equation (2) and differentiate both sides partially with respect to $I_a^*$ so that the phase $\beta$ that provides minimum copper loss is obtained as follows.

$$\sin \beta = \frac{-\Phi + \sqrt{\Phi^2 + 8(L_q - L_d)^2 I_a^{*2}}}{4(L_q - L_d)I_a^*} \tag{10}$$

Multiply this by $I_a^*$ so as to obtain $I_d^*$. This method, however, needs to obtain a relationship between $I_a^*$ and the torque in advance. As an operation of the equation (10) or of the relationship between the torque and the current increases a load on a CPU, there is a method for using approximation or referring to a table that has been computed in advance so that operation time can be shortened. Incidentally, for an SPMSM, as $L_d = L_q$, $I_d^* = 0$.

The q-axis current instruction operation section 2 is provided with a d-axis current instruction $I_d^{*'}$, i.e., the sum of the d-axis current instruction $I_d^*$ obtained as described above and the d-axis current correction value $\Delta I_d$ obtained by the weak field controller 10, and obtains the q-axis current instruction value $Iq^*$ on the basis of a torque characteristic equation of the equation (2) as follows.

$$I_q^* = \frac{T}{P\left\{ \Phi + (L_d - L_q)I_d^{*'} \right\}} \tag{11}$$

The modulated wave instruction operation section 5 converts the dq axes voltage instructions into the modulation rate. A conversion method is as follows. If a modulation rate in a case where a modulation instruction by means of a sine wave can provide an output without distortion is defined as 1, compute the magnitude of the voltage vector V1 as shown by the equation (6), use a DC mother line voltage detected value $V_{DC}$ of the power conversion circuit, and let
$$V_1 = \sqrt{V_d^{*2} + V_q^{*2}}$$

$$M_I = V_1 \cdot \frac{\sqrt{2}}{V_{DC}} \cdot \frac{2}{\sqrt{3}} \qquad (12)$$

so as to compute a result. As a pulse amplitude of the PWM depends upon $V_{DC}$, it is understood that a voltage that the motor control device can produce changes depending upon $V_{Dc}$.

A general motor control device sets a specific voltage and represents a voltage instruction as a ratio with respect to the specific voltage in some cases. A motor control device of a 200V class, e.g., computes a voltage instruction with respect to 200V. A reason why is that, if a power supply input equals the specific value, it is advantageous that there is no need to recompute the modulation rate and the operation can be simplified as the voltage instruction equals the modulation rate. If the power supply voltage changes, however, the voltage instruction differs from a practically output voltage, a current control response differs from the setting, and it is difficult to make a correct estimation for a use, such as control without a speed sensor, which uses a motor state estimator which uses the voltage instruction. Thus, it is desirable to obtain a modulation rate from the DC mother line voltage. Let dq axes voltage instructions with respect to the specific voltage be $V_{d\%}$, $V_{q\%}$ and let the specific voltage be $V_{rate}$, and compute the modulation rate as follows.
$$V_{1\%} = \sqrt{V_{d\%}^{*2} + V_{q\%}^{*2}}$$

$$M_I = V_{1\%} \cdot \frac{V_{rate}\sqrt{2}}{V_{DC}} \cdot \frac{2}{\sqrt{3}} \qquad (13)$$

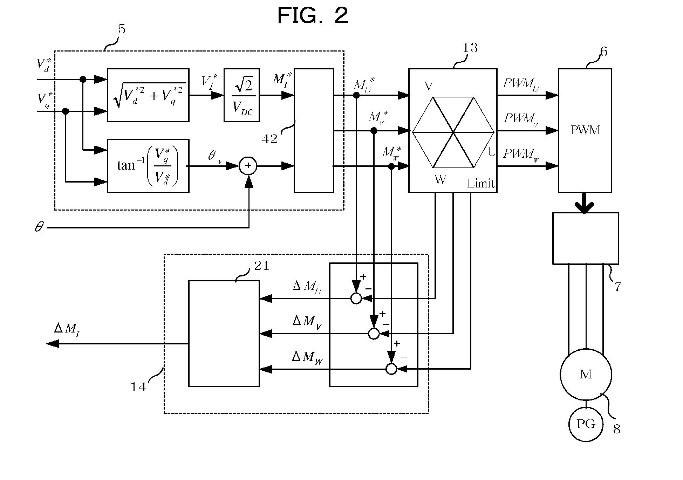

The computed modulation rate is limited within a range that can be practically output, and there are several methods for limitation. First, a method for limiting the modulation rate between maximum and minimum values of a PWM carrier signal after obtaining a three-phase modulated wave instruction will be explained with reference to Fig. 2.

The modulated wave instruction operation section shown in Fig. 1 obtains a UVW three-phase modulated wave instruction $(M_U, M_V, M_W)$ after obtaining the modulation rate instruction MI and a voltage phase as shown in Fig. 2. A method for conversion to the three-phase modulated wave instruction $(M_U, M_V, M_W)$ is a triangular wave comparison PWM system or a space vector system. According to the triangular wave comparison system, let the magnetic pole position and the voltage phase be θ and $θ_V$, respectively, and compute the modulated wave instruction as follows.
$$\theta_v = \tan^{-1}\left(\frac{V_q^*}{V_d^*}\right)$$

$$\theta_o = \theta + \theta_v$$

$$M_U = M_I\left\{\cos\theta_o - \frac{1}{6}\cos 3\theta_o\right\}$$

$$M_V = M_I\left\{\cos(\theta_o - \frac{2\pi}{3}) - \frac{1}{6}\cos 3\theta_o\right\}$$

$$M_W = M_I\left\{\cos(\theta_o + \frac{2\pi}{3}) - \frac{1}{6}\cos 3\theta_o\right\} \qquad (14)$$

A term of cos $3\theta_0$, i.e., a third harmonics term, is added so that the power supply voltage can be used to a maximum degree. There are various methods other than the above for a method for being overlaid with a third harmonics wave, an overlaid waveform and a method for conversion to three-phase.

After obtaining the three-phase instruction, limit this within the range between the maximum and minimum values of the PWM carrier signal by means of the modulated wave instruction limiter 13 so as to obtain the modulated wave instructions ($PWM_U$, $PWM_V$, $PWM_W$). Limit these in a vector representation inside a hexagon as shown in Fig. 2. Two limit values, maximum and minimum, exist for one phase. The modulation rate saturation degree operation section 14 does, although not shown, select a nearest one of the limit values and obtains differential values ($\Delta M_U$, $\Delta M_V$, $\Delta M_W$) for comparing the limit value and the modulated wave instructions. A vector synthesizer 21 vector-synthesizes this so as to obtain the modulation rate saturation degree $\Delta M$. The vector synthesis is performed, e.g., as follows. After a conversion to two-phase by means of a three-phase to two-phase conversion formula, compute a square root so as to obtain a result.

$$\begin{bmatrix} \Delta M_\alpha \\ \Delta M_\beta \end{bmatrix} = \frac{2}{3}\begin{bmatrix} 1 & -\frac{1}{2} & -\frac{1}{2} \\ 0 & \frac{\sqrt{3}}{2} & -\frac{\sqrt{3}}{2} \end{bmatrix}\begin{bmatrix} \Delta M_U \\ \Delta M_V \\ \Delta M_W \end{bmatrix} \qquad (15)$$

$$\Delta M = \sqrt{\Delta M_\alpha^2 + \Delta M_\beta^2}$$

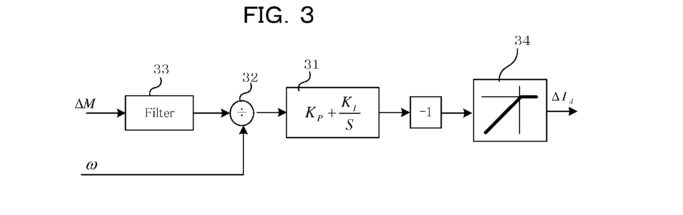

The weak field controller 4 is provided with the modulation rate saturation degree $\Delta M$ and obtains a correction value of the d-axis current instruction $\Delta I_d$. Fig.3 shows a block diagram of the weak field controller 4.

After passing a filter 33, the modulation rate saturation degree $\Delta M$ is divided by the rotation speed $\omega$ by means of a divider 32, and a PI-controller 31 performs a PI-control operation on this result so as to obtain the d-axis current correction value $\Delta I_d$. A limiter 34 does correction only in a direction for weakening the field, and thus limits the d-axis current correction value which becomes positive to 0.

The filter 33 is to remove a high frequency component included in the modulated wave in a case where the modulation rate increases and the motor is operated is an equal to or greater than 2/($\sqrt{3}$)) or for 6 steps ( the output modulation rate is approximately 4/$\pi$), and uses, e.g., a primary delay filter. Except for the filter 33 and the limiter 34, the control operation shown in Fig.3 is represented as follows.

$$\Delta I_d = -\left( K_P + \frac{K_I}{S} \right) \frac{\Delta M}{\omega} \qquad (16)$$

where $K_p$ and $K_i$ are proportional integral gains each, and S is a Laplace operator.

By doing this, the device can properly perform the weak field control while providing an output always at the maximum modulation rate, and the weak field current $\Delta I_d$ is consequently suppressed to lower than an ordinary value and efficiency thereby improves.

Incidentally, as the weak field control is to control a voltage by adjusting a motor current, a responsive characteristic is obtained from a relationship between the voltage and the current. Thus, as the modulation rate is used for the equation (16), the response changes depending upon a change of the DC mother line voltage in some cases. If its effect is significant, use the DC mother line voltage $V_{Dc}$ so as to correct a PI-control gain. If the gain is determined with respect to the specific voltage $V_{rate}$, correct the gain as follows.

$$K_P{}' = K_P \cdot \frac{V_{DC}}{V_{rate}\sqrt{2}}$$

$$K_I{}' = K_I \cdot \frac{V_{DC}}{V_{rate}\sqrt{2}} \qquad (17)$$

This is, in other words, equivalent to a conversion from the modulation rate to a unit of the voltage. The gain is corrected as described above so that a responsive characteristic that is not affected by a change of the power supply voltage can be implemented.

EXAMPLE 2

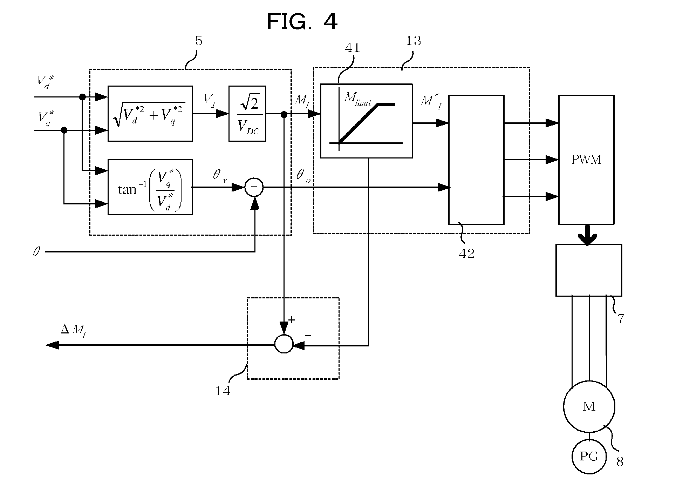

Fig. 4 is a block diagram of the modulated wave instruction operation section 5, the modulated wave instruction limiter 13 and the modulation rate saturation degree operation section, which shows a second example. The modulated wave instruction operation section 5 obtains the modulation rate instruction MI and the output phase $\theta_0$ from the dq-axes voltage instructions, similarly as shown in Fig. 2 explained as to the first example. Differences are that the modulation rate instruction MI and the output phase $\theta_0$ are made a first modulated wave instruction, that the modulation rate limiter 41 of the modulation instruction limiter 13 limits the modulation rate instruction MI to a modulation rate limit value $M_{limit}$ so as to obtain a second modulation rate instruction $M'_I$, and that the second modulation rate instruction $M'_I$ and the output phase $\theta_0$ are used so that the three-phase converter 42 obtains a three-phase second modulated wave instruction similarly, e.g., according to the equation (14).

$$M_U = M'_I \left\{ \cos\theta_o - \frac{1}{6}\cos 3\theta_o \right\}$$

$$M_V = M'_I \left\{ \cos(\theta_o - \frac{2\pi}{3}) - \frac{1}{6}\cos 3\theta_o \right\}$$

$$M_W = M'_I \left\{ \cos(\theta_o + \frac{2\pi}{3}) - \frac{1}{6}\cos 3\theta_o \right\} \qquad (18)$$

There are various methods other than the above for obtaining a modulated wave similarly as explained as to the first example, and any one of the methods can be similarly used.

The modulation rate saturation degree operation section 14 obtains the modulation rate saturation degree $\Delta M$ from a differential value between the first modulation rate instruction value MI and the modulation rate limit value $M_{limit}$. The second example has an effect, in comparison with the first example, in that the operation of the modulation rate saturation degree is simplified and a distortion component included in the modulation rate saturation amount decreases in the excessive modulation region (a region where the modulation rate exceeds $2/(\sqrt{3})$).

EXAMPLE 3

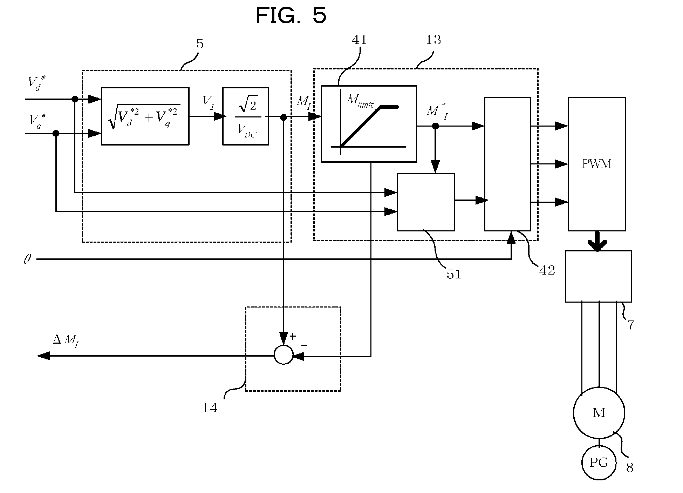

Fig. 5 is a block diagram of the modulated wave instruction operation section 5, the modulated wave instruction limiter 13 and the modulation rate saturation degree operation section, which shows a third example. The modulated wave instruction operation section 5 obtains the modulation rate instruction MI from the dq-axes voltage instructions, and makes the modulation rate instruction MI and the output phase $\theta_0$ a first modulated wave instruction. The modulation instruction limiter 13 limits the modulation rate instruction MI to the modulation rate limit value $M_{limit}$ so as to obtain $M'_I$, and a dq modulated wave instruction operation section 51 obtains modulated wave instructions on the dq axes, $M_d$, $Mq$, from $M'_I$ and the dq-axes voltage instructions as follows.

$$V_1 = \sqrt{V_d^{*2} + V_q^{*2}}$$

$$M_d = \frac{M'_I}{V_1} V_d$$

$$M_q = \frac{M'_I}{V_1} V_q \qquad (19)$$

The operation can be simplified by using for VI in the equation (19) a same value as obtained for computing MI. The modulated wave instructions ($M_d$, $Mq$) on the dq-axes are converted to modulated wave instructions of motor output phases ($M_U$, $M_V$, $M_W$), e.g., as follows.

$$\begin{bmatrix} M_U \\ M_V \\ M_W \end{bmatrix} = \begin{bmatrix} \cos\theta & -\sin\theta \\ \cos(\theta - 2\pi/3) & -\sin(\theta - 2\pi/3) \\ \cos(\theta + 2\pi/3) & -\sin(\theta + 2\pi/3) \end{bmatrix} \begin{bmatrix} M_d \\ M_q \end{bmatrix} \qquad (20)$$

A similar result is obtained if $M_W = -M_U - M_V$. According to this system, however, as a sine wave output is provided, the output voltage is distorted if the modulation rate is greater than 1. As methods for correcting this, a method for correction for providing an output of a space vector system and a method for adding a same value to the individual phases such that a maximum or minimum value of the three phases does not exceed a limit value of the output of each of the phases are proposed. The device can provide an output without distortion up to the modulation rate $2/(\sqrt{3})$ by using those methods. As the third example does not need to perform an operation of $\tan^{-1}$, operation time can be shortened in comparison with the second example.

EXAMPLE 4

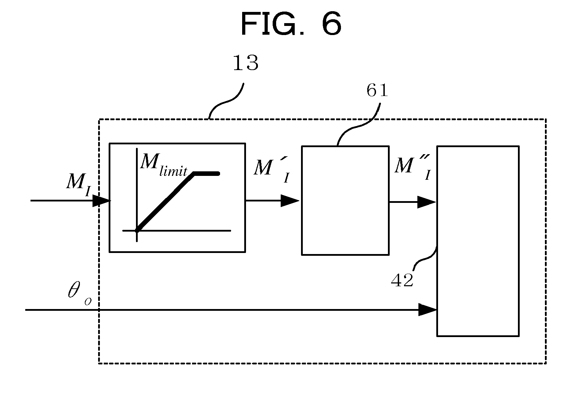

Fig. 6 is a block diagram of the modulated wave instruction limiter 13, which shows a fourth example. According to the block diagram shown in Fig. 6, an excessive modulation correction section 61 is added to the modulated wave instruction limiter shown in the block diagram of Fig. 4.

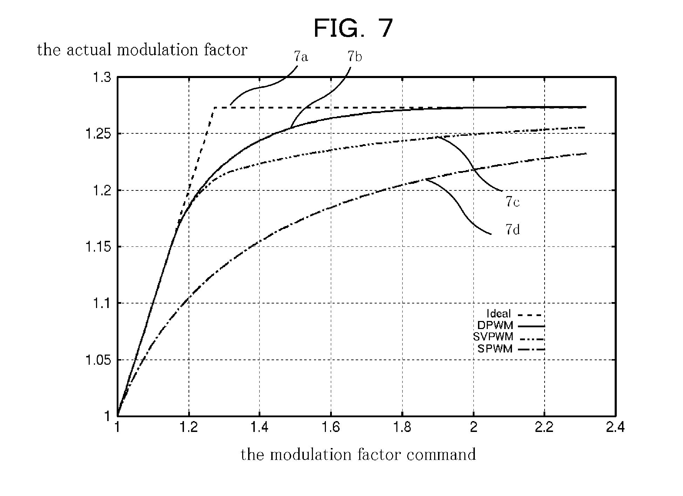

Relationships between a modulation rate and practical modulation rates are shown in Fig. 7. Numerals 7a, 7b, 7c and 7d shown in Fig. 7 indicate a modulation rate ideal value and relationships in case of DPWM, SVPWM and SPWM modulation systems, respectively. The relationships between the modulation rate instruction $M'_I$ and a practical modulation rate $M_0$ are different depending upon the modulation systems, and the practical modulation rate decreases as the modulation rate increases in regions where the modulation rate instruction is equal to or greater than 1 for the SPWM modulation system 7d and equal to or greater than $2/(\sqrt{3})$ for the DPWM modulation system 7b and the SVPWM modulation system 7c. This phenomenon is caused by output distortion. In such a case, a problem occurs in that the modulation rate saturation degree excessively increases and the response of the weak field controller 4 is rendered poor.

The relationship between the modulation rate instruction $M'_I$ and the practical modulation rate $M_0$ can be generalized as follows.

$$M_o = G(M'_I) \qquad (21)$$

Define an inverse function of a function $G()$ in the equation (21), $G^{-1}()$. If the modulation rate instruction $M'_I$ is provided, let

$$M''_I = G^{-1}(M'_I) \qquad (22)$$

and correct the modulation rate instruction so that the modulation rate instruction $M'_I$ equals the practical modulation rate $M_0$. Further, the inverse function can be tabulated so that the operation is simplified.

There is a method for adding an offset to the three-phase modulation instruction as another method. Let a relationship between the offset value and a modulation rate adjustment value be $G_2()$,

$$M'_U = M_U + sign(M_U) \cdot G_2(M'_I)$$
$$M'_V = M_V + sign(M_V) \cdot G_2(M'_I) \qquad (23)$$
$$M'_W = M_W + sign(M_W) \cdot G_2(M'_I)$$

Thus, the modulation rate instruction can equal the practical modulated wave. The offset values can be similarly tabulated so that the operation is simplified.

The modulation rate limit value, however, has to be made equal to or smaller than $4/\pi$ for correcting such excessive modulations.

The modulation rate instruction thereby equals the modulation rate that is practically output, and a proper weak field control operation is enabled without spoiling the response of the weak field controller 4.

EXAMPLE 5

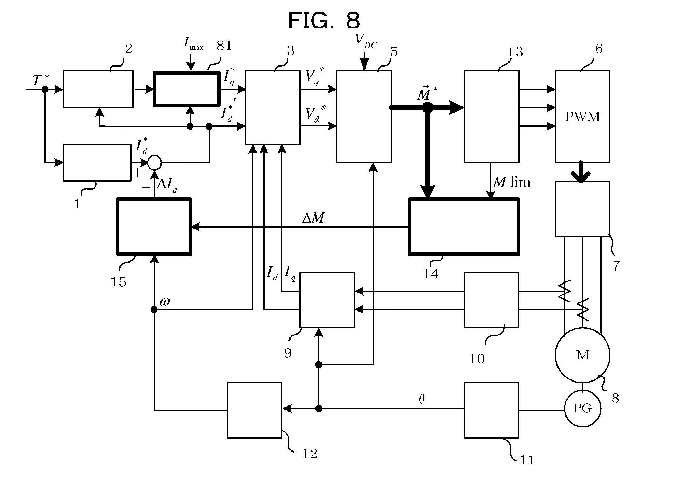

Fig. 8 shows a control block diagram of an example 5. As shown in Fig. 8, a q-axis current instruction limiter 81 which limits the output of the q-axis current instruction operation section 2 by using a current limit value $I_{max}$ and the d-axis current instruction $I_d{}^*$ is added to the configuration shown in Fig. 1. As a power conversion circuit element, etc. used for a motor control device generates heat, the current is usually limited. In case of weak field control, the voltage is determined by the d-axis current, and it is necessary to limit the q-axis current on the basis of this. A limit value is obtained in accordance with a following equation so that a synthesized current of the dq-axes currents can be limited to the current limit value $I_{max}$.

$$I_{q\lim it} = \sqrt{I_{max}^2 - I_d^{*2}} \qquad (24)$$

Although generated torque is limited owing to this, circuit destruction and so on caused by an excessive current can be surely prevented.

EXAMPLE 6

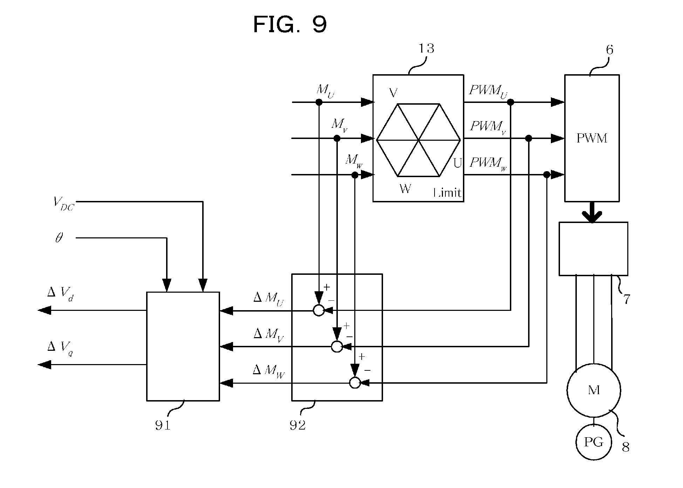

Fig. 9 shows a block diagram of a voltage deviation value operation section of an example 6. Fig. 9 is an example for which the voltage deviation value operation section is added to the example shown in Fig. 2. A subtractor 92 obtains differential values between the first modulated wave instructions ($M_U$, $M_V$, $M_W$) and the second modulated wave instructions ($PWM_U$, $PWM_V$, $PWM_W$) after being limited, and a dq-axes voltage converter 91 converts them to dq-axes voltage instruction deviation values ($\Delta V_d^*$, $\Delta V_q^*$). The dq-axes voltage converter 91 converts the deviation value of the modulated waves to a voltage deviation value, and dq-converts this with respect to the magnetic pole position $\theta$ to the dq-axes voltage instruction deviation values ($\Delta V_d^*$, $\Delta V_q^*$). Although a three-phase modulated wave instruction is used in Fig. 9, the dq-axes voltage instruction deviation value can be similarly obtained from the differential value between the modulated wave instruction MI shown in Fig. 4 or Fig. 5 and the modulated wave instruction $M'_I$ after being limited and the magnetic pole position $\theta$.

If the first modulated wave instruction is equal to or smaller than the limit value in the modulated wave instruction limiter 13, the dq-axes voltage deviation value equals 0 as the first modulated wave instruction and the second modulated wave instruction are same, and an excessive value of the instructed voltage is obtained on the dq-axes if the first modulated wave instruction exceeds the limit value.

If the dq-axes voltage deviation value is not 0 and an integral operation is simply stopped, an extra integral operation can be prevented. Further, the dq-axes voltage deviation value is multiplied by a gain, inverted in the code and provided to an integrator of the current limiter 3, so that an extra integral operation can be further effectively prevented. These methods are called anti-windup control and are effective in preventing an overshoot caused by extra integration in case of release from saturation condition, and a few are proposed other than these. If this is applied to the weak field control block shown in Fig. 1 or Fig. 9, as the dq-axes voltage instruction can be prevented from growing excessively large, the first modulated wave instruction obtained from the dq-axes voltage instruction does not grow excessively large, and consequently a response of the weak field control can be improved.

EXAMPLE 7

Fig. 10 is a flowchart which shows a control method of the motor control device of the present invention. At a step ST1, a d-axis current instruction is computed on the basis of a torque instruction. At a step ST2, a d-axis current is corrected on the basis of the modulation rate saturation degree. At a step ST3, a q-axis current instruction is computed on the basis of the torque instruction and the d-axis current instruction. Then, at a step ST4, dq-axes current values are computed from a motor current detected value. At a step ST5, dq-axes voltage instructions are computed in such a way that the dq-axes current values equal the dq-axes current instructions. At a step ST6, a first modulated wave instruction is computed on the basis of the dq-axes voltage instructions and a DC mother line voltage of a power conversion circuit. Then, at a step ST7, the first modulated wave instruction is limited to a limit value that has been set so that a second modulated wave instruction is computed. At a step ST8, a modulation rate saturation degree is computed from a differential value between the first modulated wave instruction and the limit value. At a step ST9, a PWM pattern is generated on the basis of the second modulated wave instruction. At a step ST10, the power conversion circuit is driven on the basis of the PWM pattern. An order of the individual steps is not limited to the above.

Industrial Applicability

Although the embodiment shows an example of an interior-permanent-magnet synchronous motor (IPMSM), as only a relationship between the torque and the current instruction is different for a surface-permanent-magnet synchronous motor (SPMSM), the present invention is applied as it is so that a current caused by weak field control in case of output voltage saturation can be suppressed and a highly efficient operation can be enabled in comparison with usual systems. Further, the present system is applied as magnetic flux control for an induction motor which performs vector control and a field current is controlled so that there is an effect in that voltage use efficiency improves and a greater torque value than that of the usual systems can be obtained.

**Claims**

1.  A motor control device having a current instruction operation section which computes a d-axis current instruction and a q-axis current instruction on the basis of a torque instruction in a dq-coordinate system which is set with respect to a motor magnetic flux direction, the motor control device having a dq-converter which converts a motor current detected value into the dq-coordinate system and computes a d-axis current value and a q-axis current value, the motor control device having a current controller which computes dq-axes voltage instructions such that the d-axis current value and the q-axis current value equal the d-axis current instruction and the q-axis current instruction, the motor control device having a modulated wave instruction operation section which obtains a first modulated wave instruction on the basis of the dq-axes voltage instructions and a DC mother line voltage of a power conversion circuit, the motor control device having a PWM generator which generates a PWM pattern on the basis of a second modulated wave instruction and a PWM carrier signal, comprising:

> a modulated wave instruction limiter which limits the first modulated wave instruction and generates the second modulated wave instruction;
> a modulation rate saturation degree operation section which obtains a modulation rate saturation degree from the first modulated wave instruction and a limit value of the modulated wave instruction limiter; and
> a weak field controller which corrects the d-axis current instruction value on the basis of the modulation rate saturation degree.

2. The motor control device according to Claim 1, wherein the first modulated wave instruction is a modulated wave instruction of each of motor output phases, the modulated wave instruction limiter causing a maximum value and a minimum value of a modulated wave at the motor output phase to be limit values, the modulated wave instruction limiter limiting the first modulated wave instruction between the maximum value and the minimum value so as to obtain a second modulated wave instruction of each of the motor output phases, the modulation rate saturation degree operation section synthesizing modulated wave differential values of the respective motor output phases obtained from the first modulated wave instruction and the limit values of the modulated wave instruction limiter so as to obtain the modulation rate saturation degree.

3. The motor control device according to Claim 1, wherein the first modulated wave instruction is an output phase obtained from a first modulation rate instruction obtained from the dq-axes voltage instructions and the DC mother line voltage and the dq-axes voltage instructions and a phase indicating the motor magnetic flux direction, the modulated wave instruction limiter limiting the modulated wave instruction to an optionally set modulation rate limit value so as to obtain a second modulation rate instruction, the modulated wave instruction limiter obtaining the second modulated wave instruction for each of the motor output phases on the basis of the second modulation rate instruction and the output phase, the modulation rate saturation degree operation section obtaining the modulation rate saturation degree on the basis of a differential value between the first modulation rate instruction and the modulation rate limit value.

4. The motor control device according to Claim 1, wherein the first modulated wave instruction is a first modulation rate instruction obtained from the dq-axes voltage instructions and the DC mother line voltage and a modulated wave instruction of dq-axes components, the modulated wave instruction limiter limiting the modulated wave instruction to an optionally set modulation rate limit value so as to obtain a second modulation rate instruction, the modulated wave instruction limiter obtaining the second modulated wave instruction for each of the motor output phases on the basis of the second modulation rate instruction and the modulated wave instruction of the dq-axes components, the modulation rate saturation degree operation section obtaining the modulation rate saturation degree on the basis of a differential value between the first modulation rate instruction and the modulation rate limit value.

5. The motor control device according to one of Claim 3 and Claim 4, wherein the modulated wave instruction limiter adds an excessive modulation correction to one of the first modulated wave instruction and the second modulated wave instruction so that the second modulation rate instruction equals a practically output modulation rate so as to obtain the second modulated wave instruction.

6. The motor control device according to Claim 1, wherein the weak field controller obtains a d-axis current correction value by performing one of a PI-control operation and an I-control operation on the basis of the modulation rate saturation degree so as to correct the d-axis current instruction.

7. The motor control device according to Claim 1, wherein the motor control device limits the q-axis current instruction to a maximum current value that the motor control device can output on the basis of the d-axis current instruction value corrected by the weak field controller and the maximum current value.

8. The motor control device according to Claim 1, further comprising a dq-axes voltage deviation operation section

EP 2 211 457 A1

which obtains dq-axes voltage deviations in the dq-coordinate system from the first modulated wave instruction, the second modulated wave instruction and the DC mother line voltage, wherein the current controller stops an integral operation or corrects an integral value on the basis of the dq-axes voltage deviations.

9.  A control method of a motor control device having a current instruction operation section which computes dq-axes current instructions from a torque instruction, the motor control device having a coordinate converter which coordinate-converts a motor current detected value to dq-axes current values, the motor control device having a current controller which computes dq-axes voltage instructions such that the dq-axes current values equal the dq-axes current instructions, the motor control device having a modulated wave instruction operation section which computes a first modulated wave instruction from the dq-axes voltage instructions and a DC mother line voltage of a power conversion circuit, the motor control device having a PWM generator which generates a PWM pattern on the basis of a second modulated wave instruction, comprising:

    a step for computing the dq-axes current instructions on the basis of the torque instruction;
    a step for computing the dq-axes current values from the motor current detected value;
    a step for computing the dq-axes voltage instruction such that the dq-axes current values equal the dq-axes current instructions;
    a step for computing the first modulated wave instruction on the basis of the dq-axes voltage instructions and the DC mother line voltage of the power conversion circuit;
    a step for computing the second modulated wave instruction on the basis of the first modulated wave instruction and an optionally set modulated wave limit value;
    a step for generating the PWM pattern on the basis of the second modulated wave instruction;
    a step for driving the power conversion circuit on the basis of the PWM pattern;
    a step for obtaining a modulation rate saturation degree from the modulated wave limit value and the first modulated wave instruction; and
    a step for correcting the d-axis current on the basis of the modulation rate saturation degree.

10. The control method of the motor control device according to Claim 9, wherein
    the first modulated wave instruction is a modulated wave instruction of each of motor output phases, and
    the modulated wave limit value is a maximum value and a minimum value of a modulated wave at the motor output phase,
    the motor control device limiting the first modulated wave instruction between the maximum value and the minimum value so as to obtain a second modulated wave instruction of each of the motor output phases,
    the motor control device synthesizing a differential value between the first modulated wave instruction and the modulated wave limit value of each of the motor output phases so as to obtain the modulation rate saturation degree,
    the motor control device correcting the d-axis current instruction on the basis of the modulation rate saturation degree.

11. The control method of the motor control device according to Claim 9, wherein the first modulated wave instruction is an output phase obtained from a first modulation rate instruction obtained from the dq-axes voltage instructions and the DC mother line voltage and the dq-axes voltage instructions and a phase indicating the motor magnetic flux direction, the motor control device limiting the first modulated wave instruction to an optionally set modulation rate limit value so as to obtain the second modulation rate instruction,
    the motor control device obtaining the second modulated wave instruction for each of the motor output phases on the basis of the second modulation rate instruction and the output phase, and
    the motor control device obtaining the modulation rate saturation degree on the basis of a differential value between the first modulation rate instruction and the modulation rate limit value.

12. The control method of the motor control device according to Claim 9, wherein the first modulated wave instruction is a first modulation rate instruction obtained from the dq-axes voltage instructions and the DC mother line voltage and a modulated wave instruction of dq-axes components,
    the motor control device limiting the first modulated wave instruction to an optionally set modulation rate limit value so as to obtain a second modulation rate instruction,
    the motor control device obtaining the second modulated wave instruction for each of the motor output phases on the basis of the second modulation rate instruction and the modulated wave instruction of the dq-axes components, and
    the motor control device obtaining the modulation rate saturation degree on the basis of a differential value between the first modulation rate instruction and the modulation rate limit value.

**13.** The control method of the motor control device according to one of Claim 11 and Claim 12, wherein the motor control device adds an excessive modulation correction to one of the first modulated wave instruction and the second modulated wave instruction so that the second modulation rate instruction equals a practically output modulation rate so as to obtain the second modulated wave instruction.

**14.** The control method of the motor control device according to Claim 9, wherein the motor control device obtains a d-axis current correction value by performing one of a PI-control operation and an I-control operation on the basis of the modulation rate saturation degree so as to correct the d-axis current instruction.

**15.** The control method of the motor control device according to Claim 9, wherein the motor control device limits the q-axis current instruction to a maximum current value that the motor control device can output on the basis of the d-axis current instruction value corrected on the basis of a d-axis current correction value and the maximum current value.

**16.** The control method of the motor control device according to Claim 9, wherein the motor control device obtains dq-axes voltage deviations in the dq-coordinate system from the first modulated wave instruction, the second modulated wave instruction and the DC mother line voltage, and the current controller stops an integral operation or corrects an integral value on the basis of the dq-axes voltage deviations.

# FIG. 1

## FIG. 2

FIG. 3

$$\Delta M \longrightarrow \boxed{\text{Filter}}_{33} \longrightarrow \bigotimes_{32} \div \longrightarrow \boxed{K_P + \dfrac{K_I}{S}}_{31} \longrightarrow \boxed{-1} \longrightarrow \boxed{\phantom{xx}}_{34} \longrightarrow \Delta I_d$$

$\omega$

FIG. 4

# FIG. 5

$$\sqrt{V_d^{*2} + V_q^{*2}}$$

$$\frac{\sqrt{2}}{V_{DC}}$$

$V_d^*$

$V_q^*$

$V_I$

$M_I$

$M_{limit}$

$M'_I$

PWM

$\theta$

5

41

13

51

42

7

14

$\Delta M_I$

$+$

$-$

M

PG

8

# FIG. 6

# FIG. 7

# FIG. 8

# FIG. 9

## INTERNATIONAL SEARCH REPORT

| International application No. |
| --- |
| PCT/JP2008/070169 |

A. CLASSIFICATION OF SUBJECT MATTER
*H02P21/00(2006.01)i, H02P6/08(2006.01)i, H02P27/04(2006.01)i*

According to International Patent Classification (IPC) or to both national classification and IPC

B. FIELDS SEARCHED

Minimum documentation searched (classification system followed by classification symbols)
H02P21/00, H02P6/08, H02P27/04

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho  1971-2009   Toroku Jitsuyo Shinan Koho   1994-2009

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
| --- | --- | --- |
| Y <br><br> A | JP 2007-228744 A  (Aisin AW Co., Ltd.), <br> 06 September, 2007 (06.09.07), <br> Par. Nos. [0025] to [0094]; Figs. 1 to 7 <br> (Family: none) | 1,6,7,9,14, 15 <br><br> 2-5,8,10-13, 16 |
| Y <br><br> A | JP 2004-215320 A  (Aisin AW Co., Ltd.), <br> 29 July, 2004 (29.07.04), <br> Par. No. [0085] <br> & US 2005/0075766 A1 | 1,6,7,9,14, 15 <br><br> 2-5,8,10-13, 16 |
| A | JP 2007-274844 A  (Aisin AW Co., Ltd.), <br> 18 October, 2007 (18.10.07), <br> Full text; all drawings <br> & US 2007/0241715 A1    & WO 2007/125669 A1 | 1-16 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search <br> 13 January, 2009 (13.01.09) | Date of mailing of the international search report <br> 27 January, 2009 (27.01.09) |
| --- | --- |
| Name and mailing address of the ISA/ <br> Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/070169

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2005/088822 A1  (Yaskawa Electric Corp.),<br>22 September, 2005 (22.09.05),<br>Full text; all drawings<br>& US 2007/0170885 A1    & US 7304451 B2 | 1-16 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006254572 A
- JP 2003209996 A
- JP 2007252052 A

**Non-patent literature cited in the description**

- **Yoji Takeda ; Nobuyuki Matsui ; Shigeo Morimoto ; Yukio Honda.** Design and Control of Interior Magnet Synchronous Motor. *Ohm-sha,* 25 October 2001, 26-27
- **Bon-Ho Bae ; Nitin Patel ; Steven Schultz ; Seung-Ki Sul.** New Field Weakening Technique for High Saliency Interior Permanent Magnet Motor. *IEEE Industry Application Conference,* 13 October 2003